(19) **Europäisches Patentamt
European Patent Office
Office européen des brevets**

(11) **EP 4 640 738 A1**

(12) **EUROPEAN PATENT APPLICATION**
published in accordance with Art. 153(4) EPC

(43) Date of publication:
29.10.2025 Bulletin 2025/44

(21) Application number: 23906957.8

(22) Date of filing: 18.12.2023

(51) International Patent Classification (IPC):
*C08G 63/91* (2006.01) *C08G 63/183* (2006.01)
*C08J 11/04* (2006.01)

(52) Cooperative Patent Classification (CPC):
C08G 63/183; C08G 63/91; C08J 11/04

(86) International application number:
PCT/JP2023/045232

(87) International publication number:
WO 2024/135597 (27.06.2024 Gazette 2024/26)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 20.12.2022 JP 2022202697

(71) Applicant: **Toray Industries, Inc.**
**Tokyo 103-8666 (JP)**

(72) Inventors:
• IKEDA, Yuki
  **Nagoya-shi, Aichi 455-8502 (JP)**
• TOJO, Yusuke
  **Nagoya-shi, Aichi 455-8502 (JP)**
• UMETSU, Hideyuki
  **Nagoya-shi, Aichi 455-8502 (JP)**

(74) Representative: **Mewburn Ellis LLP**
**Aurora Building**
**Counterslip**
**Bristol BS1 6BX (GB)**

(54) **METHOD FOR PRODUCING POLYESTER RESIN, AND POLYESTER RESIN**

(57) An object of the present invention is to provide a method for producing a polyester resin having good flowability and good mechanical properties with little mold fouling and being excellent in moldability, productivity, and quality. The present invention is a method for producing a polyester resin, and the method includes a heat treatment [1] step of adding 0.1 to 5.0 parts by mass of an alkylene glycol to 100 parts by mass of a polyester resin [A] to obtain a mixture and heating the mixture at a temperature more than a melting point $T_{mA}$ (°C) of the polyester resin [A] to obtain a polyester resin [B] and a heat treatment [2] step of heating the polyester resin [B] at a temperature of $T_{mB}$ (°C) or less with respect to the melting point $T_{mB}$ (°C) of the polyester resin [B], and the polyester resin [B] contains 0.05 mass% or more and 4.76 mass% or less of the alkylene glycol in an unreacted state.

EP 4 640 738 A1

**Description**

TECHNICAL FIELD

The present invention relates to a method for producing a polyester resin, and a polyester resin.

BACKGROUND ART

Polyester resins are excellent in mechanical properties, insulation properties, heat resistance, and molding processability, and are therefore widely used in various containers, films, electric and electronic equipment components, automobile components, and machine components. Specific examples of the electric and electronic equipment components and the automobile components used include industrial molded articles such as connectors, relays, and switches.

However, in recent years, demand has been increasing for reduction in size and weight of industrial molded articles, and, in response to such demand, polyester resins for use in automobiles and electric and electronic equipment have been particularly desired to improve in flowability during melting without deterioration of mechanical properties and mold contamination during molding.

Polyester resins particularly contain a cyclic oligomer including a cyclic trimer as a main component, and the cyclic oligomer bleeds out to the molded article surface during molding and adheres to the surface of the mold to cause mold fouling. Such mold fouling causes surface roughness and whitening of the resulting molded article, and generates a non-conforming article (defective). Furthermore, frequent removal of mold fouling requires production stop, and thus causes a problem of deterioration of productivity. Therefore, a polyester resin having a low oligomer content is required.

In addition, in recent years, demand has been increasing for recycling polyester resins for a decarbonized society. Waste reduction is also required that is achieved by regenerating collected polyester resins collected from non-conforming articles in production processes or from consumed and discarded products into polyester resin products again.

As a method of obtaining a polyester resin having a low oligomer content, a method for producing a polybutylene terephthalate resin having a high polymerization degree (Patent Document 1) is disclosed in which a dicarboxylic acid containing terephthalic acid as a main component and/or its alkyl ester derivative and a diol containing 1,4-butanediol as a main component are subjected to an esterification reaction or a transesterification reaction, and then subjected to melt polymerization to obtain polybutylene terephthalate having a low polymerization degree and having a terminal carboxyl group concentration of 10 eq/t or less and an intrinsic viscosity of 0.6 to 0.7 dL/g, and then the polybutylene terephthalate is subjected to solid-phase polymerization, and a method for producing a polyester resin containing terephthalic acid and ethylene glycol as a main component (Patent Document 2) is disclosed in which a prepolymer having a specific intrinsic viscosity, a specific antimony element concentration, a specific phosphorus element concentration, a specific carboxyl terminal group amount, and a specific hydroxy terminal group amount is subjected to solid-phase polymerization.

As a method of recycling a polyester resin, a production method (Patent Document 3) is disclosed that includes a step of pressurizing a polyester resin and an alkylene glycol at a temperature of the melting point of the polyester resin or more to depolymerize the polyester resin and polymerizing depolymerized products.

PRIOR ART DOCUMENTS

PATENT DOCUMENTS

Patent Document 1: Japanese Patent Laid-open Publication No. 2014-181245
Patent Document 2: Japanese Patent Laid-open Publication No. 2002-20473
Patent Document 3: Japanese Patent Laid-open Publication No. 2005-97521

SUMMARY OF THE INVENTION

PROBLEMS TO BE SOLVED BY THE INVENTION

However, the invention disclosed in Patent Document 1 has a problem that obtaining a polyester resin having a low oligomer content needs an increase in the polymerization degree of the polyester resin, resulting in deterioration of the flowability of the resin.

The invention disclosed in Patent Document 2 has a problem that solid-phase polymerization performed in a short time so as not to reduce the flowability results in insufficient reduction of the oligomer content, showing difficulty of achieving both reduction of the oligomer content and improved flowability.

The invention disclosed in Patent Document 3 has a problem of inefficiency because regeneration of a polyester resin needs addition of a large amount of a petroleum-derived alkylene glycol, resulting in an increase in the amount of carbon dioxide emitted from the raw material and the amount of energy required for heating. There is also a problem that in the obtained recycled polyester resin, the acid value is increased and the hydrolysis resistance and the like are decreased by thermal decomposition during melt polymerization at a high temperature.

An object of the present invention is to provide a polyester resin having excellent flowability and a reduced oligomer content and a method for producing the polyester resin, and to provide a method for producing a recycled polyester resin in which a collected polyester resin is efficiently regenerated and the quality of the regenerated polyester resin is improved.

SOLUTIONS TO THE PROBLEMS

In order to solve the above problems, the present invention provides the following solutions.

1. A method for producing a polyester resin, the method including:

a heat treatment [1] step of adding 0.1 to 5.0 parts by mass of an alkylene glycol to 100 parts by mass of a polyester resin [A] to obtain a mixture and heating the mixture at a temperature more than a melting point $T_{mA}$ (°C) of the polyester resin [A] to obtain a polyester resin [B]; and

a heat treatment [2] step of heating the polyester resin [B] at a temperature of $T_{mB}$ (°C) or less, $T_{mB}$ (°C) representing a melting point of the polyester resin [B],

the polyester resin [B] containing 0.05 mass% or more and 4.76 mass% or less of the alkylene glycol in an unreacted state.

2. The method for producing a polyester resin according to the item 1, wherein the polyester resin [A] is a collected polyester resin.

3. The method for producing a polyester resin according to the item 1 or 2, wherein the heat treatment [1] step is performed using an extruder.

4. The method for producing a polyester resin according to any one of the items 1 to 3, wherein the polyester resin [A] contains at least polybutylene terephthalate.

5. The method for producing a polyester resin according to the item 4, wherein the alkylene glycol is 1,4-butanediol.

6. A polyester resin having an oligomer content of less than 0.30 mass% and an intrinsic viscosity of 0.70 dL/g or more and 1.00 dL/g or less.

7. The polyester resin according to the item 6, being polybutylene terephthalate.

EFFECTS OF THE INVENTION

According to the present invention, a polyester resin excellent in moldability and productivity can be provided in which the flowability is good, decomposition of the resin and molding defects are suppressed during molding, and mold fouling due to an oligomer during molding is less likely to occur, and a method for producing the polyester resin can be provided. This production method can be applied not only to production of a virgin resin but also to production of a recycled polyester resin obtained by reusing a collected polyester resin, and can provide a recycled polyester resin with a higher quality than in material recycling at a lower cost than in chemical recycling.

EMBODIMENTS OF THE INVENTION

The method for producing a polyester resin of the present invention includes a heat treatment [1] step of adding an alkylene glycol to a polyester resin [A] to obtain a mixture and heating the mixture at a temperature more than the melting point of the polyester resin [A] to obtain a polyester resin [B] and a heat treatment [2] step of heating the polyester resin [B] at a temperature of the melting point of the polyester resin [B] or less.

In the heat treatment [1] step, a predetermined amount of the alkylene glycol is added to the polyester resin [A], and the heat treatment [1] is performed. Thus, while the alkylene glycol and the polyester resin [A] react with each other to reduce the viscosity of the polyester resin [A] with an increase in the hydroxyl group amount, the alkylene glycol can be contained partially in an unreacted state. In the heat treatment [2] step, the heat treatment [2] is performed in the presence of the unreacted alkylene glycol. Thus, a ring-opening reaction and volatilization of a cyclic oligomer are promoted, and a polyester resin having excellent flowability can be obtained while the oligomer content is efficiently reduced. The amount of the alkylene glycol to be used in the present invention may be small, and in addition, the alkylene glycol can be quickly contained in the polyester resin [A] in a short time by the heat treatment at a temperature more than the melting point of the polyester resin [A]. Thus, the required amount of alkylene glycol and the energy consumption in the process can be reduced, and the carbon dioxide emission can be reduced.

In a normal recycling method, the oligomer content and the acid value of the polyester resin obtained through the thermal history in the recycling process are increased, and the intrinsic viscosity tends to vary. Meanwhile, if a collected polyester resin is applied as the polyester resin [A] and the method for producing a polyester resin of the present invention is performed, a recycled polyester resin can be provided that has a low oligomer content, a low acid value, and a small variation in the intrinsic viscosity.

Each element in the production method of the present invention will be described in detail.

[Polyester Resin [A]]

The polyester resin [A] usable in the present invention is a polymer or a copolymer having a main structural unit consisting of at least one residue selected from the group consisting of (1) a dicarboxylic acid or its ester-forming derivative and a diol or its ester-forming derivative, (2) a hydroxycarboxylic acid or its ester-forming derivative, and (3) a lactone. Here, the expression "having a main structural unit" refers to having 50 mol% or more of the at least one residue selected from the group consisting of (1) to (3) in all the structural units, and in a preferred aspect, the polyester resin [A] has 80 mol% or more of the at least one residue. Among these, a polymer or a copolymer is preferable that has a main structural unit consisting of a residue of (1) a dicarboxylic acid or its ester-forming derivative and a diol or its ester-forming derivative, from the viewpoint of further superiority in mechanical properties and heat resistance.

Examples of the dicarboxylic acid or its ester-forming derivative include aromatic dicarboxylic acids such as terephthalic acid, isophthalic acid, phthalic acid, 2,6-naphthalenedicarboxylic acid, 1,5-naphthalenedicarboxylic acid, bis(p-carboxyphenyl)methane, 1,4-anthracenedicarboxylic acid, 1,5-anthracenedicarboxylic acid, 1,8-anthracenedicarboxylic acid, 2,6-anthracenedicarboxylic acid, 9,10-anthracenedicarboxylic acid, 4,4'-diphenyl ether dicarboxylic acid, 5-tetrabutylphosphonium isophthalate, and sodium 5-sulfoisophthalate, aliphatic dicarboxylic acids such as oxalic acid, succinic acid, adipic acid, sebacic acid, azelaic acid, dodecanedioic acid, malonic acid, glutaric acid, and dimer acid, alicyclic dicarboxylic acids such as 1,3-cyclohexanedicarboxylic acid and 1,4-cyclohexanedicarboxylic acid, and ester-forming derivatives thereof. Two or more of them may be used.

Examples of the diol or its ester-forming derivative include aliphatic or alicyclic glycols having a carbon number of 2 to 20 such as ethylene glycol, propylene glycol, 1,4-butanediol, neopentyl glycol, 1,5-pentanediol, 1,6-hexanediol, decamethylene glycol, cyclohexanedimethanol, cyclohexanediol, and dimer diol, long-chain glycols having a molecular weight of 200 to 100,000 such as polyethylene glycol, poly-1,3-propylene glycol, and polytetramethylene glycol, aromatic dioxy compounds such as 4,4'-dihydroxybiphenyl, hydroquinone, t-butylhydroquinone, bisphenol A, bisphenol S, and bisphenol F, and ester-forming derivatives thereof. Two or more of them may be used.

Examples of the polymer or the copolymer having a structural unit consisting of a dicarboxylic acid or its ester-forming derivative and a diol or its ester-forming derivative include aromatic polyester resins such as polyethylene terephthalate, polypropylene terephthalate, polybutylene terephthalate, polypropylene isophthalate, polybutylene isophthalate, polybutylene naphthalate, polypropylene isophthalate/terephthalate, polybutylene isophthalate/terephthalate, polypropylene terephthalate/naphthalate, polybutylene terephthalate/naphthalate, polybutylene terephthalate/decane dicarboxylate, polypropylene terephthalate/sodium 5-sulfoisophthalate, polybutylene terephthalate/sodium 5-sulfoisophthalate, polypropylene terephthalate/polyethylene glycol, polybutylene terephthalate/polyethylene glycol, polypropylene terephthalate/polytetramethylene glycol, polybutylene terephthalate/polytetramethylene glycol, polypropylene terephthalate/isophthalate/polytetramethylene glycol, polybutylene terephthalate/isophthalate/polytetramethylene glycol, polybutylene terephthalate/succinate, polypropylene terephthalate/adipate, polybutylene terephthalate/adipate, polypropylene terephthalate/sebacate, polybutylene terephthalate/sebacate, polypropylene terephthalate/isophthalate/adipate, polybutylene terephthalate/isophthalate/succinate, polybutylene terephthalate/isophthalate/adipate, and polybutylene terephthalate/isophthalate/sebacate. These polymers and copolymers may be used singly or in combination of two or more thereof. Here, the sign "/" means that the copolymer includes the polymer components described before and after the sign.

Among these, from the viewpoint of further improving mechanical properties and heat resistance, a polymer or a copolymer is more preferable that has a main structural unit consisting of a residue of an aromatic dicarboxylic acid or its ester-forming derivative and a residue of an aliphatic diol or its ester-forming derivative, and a polymer or a copolymer is still more preferable that has a main structural unit consisting of a residue of terephthalic acid, naphthalenedicarboxylic acid, or an ester-forming derivative thereof and a residue of an aliphatic diol selected from propylene glycol and 1,4-butanediol or of an ester-forming derivative thereof.

Among them, at least one aromatic polyester resin is particularly preferable that is selected from polyethylene terephthalate, polypropylene terephthalate, polybutylene terephthalate, polypropylene naphthalate, polybutylene naphthalate, polypropylene isophthalate/terephthalate, polybutylene isophthalate/terephthalate, polypropylene terephthalate/naphthalate, polybutylene adipate/terephthalate, polybutylene terephthalate/sebacate, polybutylene terephthalate/naphthalate, and the like, and at least one is more preferable that is selected from polyethylene terephthalate, polybutylene terephthalate, polybutylene isophthalate/terephthalate, polybutylene decane dicarboxylate/terephthalate, polybutylene terephthalate/naphthalate, and polybutylene/ethylene terephthalate. Two or more of them can also be used in any content. Polybutylene terephthalate is more preferable from the viewpoint of excellent balance between mechanical properties and molding processability.

The polyester resin [A] usable in the present invention preferably has an acid value of 100 eq/t or less, more preferably 60 eq/t or less, still more preferably 30 eq/t or less, and particularly preferably 20 eq/t or less from the viewpoint of suppressing deterioration of mechanical properties of the polyester resin obtained by the present invention and moldability. The lower limit of the acid value is 0 eq/t. Here, the acid value is a value obtained by measurement in which the polyester resin [A] is dissolved in an o-cresol/chloroform solvent and then the resulting solution is titrated with ethanolic potassium hydroxide.

The polyester resin [A] usable in the present invention preferably has an intrinsic viscosity of 0.30 dL/g or more that is obtained by measuring the o-chlorophenol solution at 25°C, from the viewpoint of ease of granulation of the resulting polyester resin [B]. The intrinsic viscosity is more preferably 0.36 dL/g or more. If the polyester resin [B] is granulated, the subsequent heat treatment [2] can be appropriately performed. The intrinsic viscosity is preferably 2.00 dL/g or less, and more preferably 1.60 dL/g or less from the viewpoint of capability of improving flowability.

The polyester resin [A] usable in the present invention preferably has a weight-average molecular weight of 9000 or more, and more preferably 10000 or more from the viewpoint of ease of granulation of the resulting polyester resin [B]. If the polyester resin [B] is granulated, the subsequent heat treatment [2] can be appropriately performed. The weight-average molecular weight is preferably 40000 or less, and more preferably 30000 or less from the viewpoint of capability of improving flowability. Here, the weight-average molecular weight is a value calculated by gel permeation chromatography (solvent: hexafluoroisopropanol, standard sample: polymethyl methacrylate).

Preferred examples of the shape of the polyester resin [A] include shapes of a flake, a powder, and a pellet. From the viewpoint of efficiently performing the subsequent heat treatment [1], the particle size is preferably reduced to some extent. Therefore, the polyester resin [A] having a large shape is preferably pulverized to an appropriate size of about 1.5 to 5.0 mm, but the present invention is not limited thereto.

The polyester resin [A] in the present invention may be a virgin polyester resin [A-1] obtained by a polymerization reaction from a raw material, or may be a collected polyester resin [A-2] such as a pre-consumer recovered product obtained from a non-conforming article in a production process or a post-consumer recovered product obtained by collecting a resin product, distributed in the market, in which a polyester resin is used. One of them, or both of them mixed at any ratio can be used.

In the production method of the present invention, if the collected polyester resin [A-2] is used, a polyester resin with a high quality can be obtained from a collected polyester resin with a low quality, the use of a collected polyester resin is expanded, and the amount of waste and carbon dioxide emission can be reduced, and therefore the collected polyester resin [A-2] is preferably used.

[Virgin Polyester Resin [A-1]]

The virgin polyester resin [A-1] used in the present invention can be produced with a known method such as a polycondensation method or a ring-opening polymerization method. The production method may be batch polymerization or continuous polymerization, and either of a transesterification reaction and a direct polymerization reaction can be applied. However, from the viewpoint of productivity, continuous polymerization is preferable, and direct polymerization is more preferably used.

In a case where the virgin polyester resin [A-1] used in the present invention is a polymer or a copolymer containing a dicarboxylic acid or its ester-forming derivative and a diol or its ester-forming derivative as main components and obtained by a condensation reaction, the virgin polyester resin [A-1] can be produced by subjecting the dicarboxylic acid or its ester-forming derivative and the diol or its ester-forming derivative to an esterification reaction or a transesterification reaction and then subjecting to a polycondensation reaction.

For effective advance of the esterification reaction or the transesterification reaction and the polycondensation reaction, a polymerization reaction catalyst is preferably added during these reactions. Specific examples of the polymerization reaction catalyst include organic titanium compounds such as a methyl ester, a tetra-n-propyl ester, a tetra-n-butyl ester, a tetraisopropyl ester, a tetraisobutyl ester, a tetra-tert-butyl ester, a cyclohexyl ester, a phenyl ester, a benzyl ester, and a tolyl ester of titanic acid and mixed esters thereof, tin compounds such as dibutyltin oxide, methyl phenyltin oxide, tetraethyltin, hexaethylditin oxide, cyclohexahexylditin oxide, didodecyltin oxide, triethyltin hydroxide, triphenyltin hydroxide, triisobutyltin acetate, dibutyltin diacetate, diphenyltin dilaurate, monobutyltin trichloride, dibutyltin dichloride, tributyltin chloride, dibutyltin sulfide, butylhydroxytin oxide, and alkyl stannonic acids including methyl stannonic acid, ethyl stannonic acid, and butyl stannonic acid, zirconia compounds such as zirconium tetra-n-butoxide, and antimony compounds such as antimony trioxide and antimony acetate. Two or more of them may be used.

Among these polymerization reaction catalysts, organic titanium compounds and tin compounds are preferable, and a tetra-n-butyl ester of titanic acid is more preferably used. The amount of the polymerization reaction catalyst added is preferably in a range of 0.01 parts by mass or more and 0.2 parts by mass or less with respect to 100 parts by mass of the virgin polyester resin [A-1].

The polycondensed polyester resin is taken out of a reaction vessel and cooled to form a solid. The polyester resin is generally granulated into pellets with a method such as a method in which the polyester resin is taken out in a strand form, solidified or formed into a semi-solid state in cooling water, and then cut with a strand cutter, or a method in which the polyester resin is cut with an underwater cutter while extruded into water.

The virgin polyester resin [A-1] may contain an additive such as an inorganic particle, a fluorescent brightener, an ultraviolet inhibitor, an infrared absorber, a heat stabilizer, or an antioxidant.

[Collected Polyester Resin [A-2]]

The collected polyester resin [A-2] used in the present invention is a pre-consumer recovered product obtained from a non-conforming article in a production process or a post-consumer recovered product obtained by collecting a resin product, distributed in the market, in which a polyester resin is used, and can be suitably used in performing the method for producing a polyester resin of the present invention because a polyester resin with a high quality can be obtained while the amount of waste and carbon dioxide emission are reduced.

Examples of the collected polyester resin [A-2] include pre-consumer articles such as non-conforming articles, including non-conforming pellets, bottles, films, fibers, and injection-molded articles generated at the time of producing a polyester resin or at the time of producing a polyester resin composition containing a polyester resin, and wastes at the time of producing a resin product, and post-consumer articles obtained by collecting products containing a polyester resin from the market.

The collected polyester resin [A-2] may contain a component other than a polyester resin as long as the properties of the polyester resin to be produced are not affected. Examples of the component other than a polyester resin include a stabilizer, a weather resistance agent, a lubricant, a pigment, a dye, a nucleating agent, a plasticizer, an antistatic agent, a flame retardant, an anti-coloring agent, an inorganic filler such as a fibrous reinforcing filler, and a polymer other than a polyester resin, and these components can be contained.

[Alkylene Glycol]

The alkylene glycol used in the present invention may be the diol component exemplified in the section of [Polyester Resin [A]] described above, and is preferably a diol component included in the polyester resin [A] from the viewpoint of mechanical properties. In a case where the polyester resin [A] is a polyethylene terephthalate resin, ethylene glycol is preferable, and in a case where the polyester resin [A] is a polybutylene terephthalate resin, 1,4-butanediol is preferable. From the viewpoint of the balance between mechanical properties and molding processability, combination of polybutylene terephthalate and 1,4-butanediol is more preferable.

The alkylene glycol used in the present invention preferably has a boiling point in a range of $(T_{mA} - 90)$ °C or more and $(T_{mA} + 20)$ °C or less with respect to the melting point $T_{mA}$ (°C) of the polyester resin [A]. The alkylene glycol preferably has a boiling point of $(T_{mA} - 90)$ °C or more, more preferably $(T_{mA} - 60)$ °C or more, and still more preferably $(T_{mA} - 30)$ °C or more because in the heat treatment [1] step, volatilization of such an alkylene glycol is suppressed to a small extent, and thus the alkylene glycol can be efficiently added to the polyester resin [A], and the content of the unreacted alkylene glycol in the polyester resin [B] described below (details will be described below) can be increased. The alkylene glycol preferably has a boiling point of $(T_{mA} + 20)$ °C or less, more preferably $(T_{mA} + 10)$ °C or less, and still more preferably $T_{mA}$ (°C) or less because in the subsequent heat treatment [2] step, such an alkylene glycol in an unreacted state and the like are likely to volatilize, and thus an effect of reducing the oligomer content by volatilization is obtained.

The amount of the alkylene glycol added in the present invention is 0.1 to 5.0 parts by mass with respect to 100 parts by mass of the polyester resin [A]. In a case where the amount of the alkylene glycol added is less than 0.1 parts by mass, the effect of decreasing the acid value and the effect of reducing the oligomer content by the subsequent heat treatment [2] cannot be exhibited. The lower limit of the amount of the alkylene glycol added is preferably 0.5 parts by mass or more, and more preferably 1.0 parts by mass or more from the viewpoint of reducing the oligomer content. If the amount of the alkylene glycol added is more than 5.0 parts by mass, the melt viscosity of the polyester resin [B] is too low, the resin is difficult to collect in a uniform shape, and thus the subsequent heat treatment [2] cannot be appropriately performed. The upper limit of the amount of the alkylene glycol added is preferably 4.0 parts by mass or less, and more preferably 3.0 parts by mass or less from the viewpoint of ease of granulation of the polyester resin [B].

[Polyester Resin [B]]

The polyester resin [B] is an intermediate obtained by subjecting the polyester resin [A] to the heat treatment [1] described below.

The polyester resin [B] contains 0.05 mass% or more and 4.76 mass% or less of the unreacted alkylene glycol. The unreacted alkylene glycol is the alkylene glycol component added in the heat treatment [1] remaining in an unreacted state. If the content of the unreacted alkylene glycol is 0.05 mass% or more, more preferably 0.10 mass% or more, and still more preferably 0.20 mass% or more, the oligomer content is reduced in the subsequent heat treatment [2], and mold fouling is suppressed. The upper limit of the content of the unreacted alkylene glycol contained in the polyester resin [B] is, as the upper limit of the alkylene glycol component added in the heat treatment [1], 5.0 parts by mass with respect to 100 parts by mass of the polyester resin [B], and 4.76 mass% with respect to 100 mass% of the polyester resin [B]. The content of the unreacted alkylene glycol is preferably 2.91 mass% or less, and more preferably 1.96 mass% or less from the viewpoint of ease of granulation.

The content of the unreacted alkylene glycol is determined by dissolving the polyester resin [B] in a hexafluoroisopropanol/chloroform solvent, then adding acetonitrile to precipitate an insoluble component, filtering the precipitate with a polytetrafluoroethylene disk filter (0.45 $\mu$m) to obtain a filtrate, and quantifying the unreacted alkylene glycol using a gas chromatograph.

The polyester resin [B] may contain the additive contained in the polyester resin [A].

The polyester resin [B] in the present invention preferably has an intrinsic viscosity of 0.30 dL/g or more and less than 0.70 dL/g that is obtained by measuring the o-chlorophenol solution at 25°C. The intrinsic viscosity is more preferably 0.30 dL/g or more and less than 0.60 dL/g. If the intrinsic viscosity is 0.30 dL/g or more, the amount of the powdery polyester resin having a high melting point is not large in the subsequent heat treatment [2] step, and a white foreign object is less likely to be generated in the molded article, and therefore such an intrinsic viscosity is preferable. If the intrinsic viscosity is less than 0.70 dL/g, the oligomer content can be sufficiently reduced within a range in which the intrinsic viscosity is not too high during the heat treatment [2] step, and therefore such an intrinsic viscosity is preferable.

The polyester resin [B] in the present invention preferably has a weight-average molecular weight of 7000 or more and less than 15000. If the weight-average molecular weight is 7000 or more, and more preferably 9000 or more, an increase in the amount of the powdery polyester resin having a high melting point is suppressed in the subsequent heat treatment [2] step, and a white foreign object is less likely to be generated in the molded article, and therefore such a weight-average molecular weight is preferable. If the weight-average molecular weight is less than 15000, and more preferably less than 11000, the oligomer content can be sufficiently reduced within a range in which the intrinsic viscosity is not too high during the heat treatment [2] step, and therefore such a weight-average molecular weight is preferable. Here, the weight-average molecular weight is a value calculated by gel permeation chromatography (solvent: hexafluoroisopropanol, standard sample: polymethyl methacrylate).

The polyester resin [B] in the present invention preferably has a hydroxyl group concentration of 50 eq/t or more from the viewpoint of reducing the oligomer content. The hydroxyl group concentration is more preferably 60 eq/t or more, and still more preferably 80 eq/t or more. The hydroxyl group concentration is preferably 50 eq/t or more because at such a concentration, a sufficient effect of reducing the oligomer content is obtained. The upper limit of the hydroxyl group concentration is not particularly limited. In the case of producing the granulated polyester resin [B], the hydroxyl group concentration is preferably 350 eq/t or less, and at such a concentration, a sufficient effect of reducing the oligomer content is also exhibited. The hydroxyl group concentration is calculated by dissolving the polyester resin [B] in deuterated hexafluoroisopropanol and performing $^1$H-NMR measurement.

The polyester resin [B] in the present invention preferably has an acid value of 100 eq/t or less, more preferably 60 eq/t or less, still more preferably 30 eq/t or less, and particularly preferably 20 eq/t or less from the viewpoint of suppressing deterioration of mechanical properties of the polyester resin produced with the method of the present invention and moldability. The lower limit of the acid value is 0 eq/t. Here, the acid value is a value obtained by measurement in which the polyester resin [B] is dissolved in an o-cresol/chloroform solvent and then the resulting solution is titrated with ethanolic potassium hydroxide.

[Heat Treatment [1] Step]

Hereinafter, the method of heat-treating the polyester resin [A] of the present invention to obtain the polyester resin [B] will be described in detail.

In the heat treatment [1] step, while the polyester resin [A] is heated to a temperature more than the melting point $T_{mA}$ (°C) of the polyester resin [A] to melt the polyester resin [A], 0.1 to 5.0 parts by mass of an alkylene glycol is added to 100 parts by mass of the polyester resin [A], and shearing is applied for a predetermined time. The heat treatment [1] step is preferably performed using a polymerization tank equipped with a stirring blade, a single-screw extruder, a twin-screw extruder, a triaxial extruder, or a conical extruder equipped with a "unimelt" or "dulmadge" screw, a kneader-type kneading machine, or the like, but is not limited thereto. An extruder is more preferable because it can mix the polyester resin and the alkylene glycol uniformly in a short time and increase the content of the unreacted alkylene glycol.

In the heat treatment [1] step, the alkylene glycol may be added immediately after the start of heating of the polyester resin [A], or after the melt of the polyester resin [A].

The upper limit of the temperature of the heat treatment [1] is preferably $(T_{mA} + 40)$ °C or less with respect to the melting point $T_{mA}$ (°C) of the polyester resin [A]. If the temperature of the heat treatment [1] is set to be more than $T_{mA}$ (°C) and $(T_{mA} + 40)$ °C or less, the minimum amount of heat for melt of the resin can be applied without deterioration of the properties of the resin.

The execution time of the heat treatment [1] step is preferably 30 seconds or more and 20 minutes or less. If the execution time is 30 seconds or more, the alkylene glycol can be uniformly contained in the polyester resin [A], and therefore such an execution time is preferable. If the execution time is 20 minutes or less, more preferably 10 minutes or less, and still more preferably 5 minutes or less, the content of the unreacted alkylene glycol is not too low in the resulting polyester resin [B], and therefore such an execution time is preferable. Here, the execution time of the heat treatment [1] refers to the time taken from the addition of the alkylene glycol to the polyester resin [A] to the end of the execution of the heat treatment [1].

In the case of performing the heat treatment [1] with an extruder, a method may be used such as a method in which the alkylene glycol is added together with the polyester resin [A] with a liquid addition nozzle installed between the breech-loading part and the discharge part of the extruder using a plunger pump, or a method in which the alkylene glycol is supplied from the breech-loading part or the like using a metering pump.

A vent may be installed in the extruder, and the pressure of the vent may be reduced to the atmospheric pressure or less and thus the heat treatment [1] may be performed, from the viewpoint of improving the quality of the pellet. Meanwhile, in a case where a vent is installed on the downstream side of the position where the alkylene glycol is added, reduction in the pressure of the vent leads to reduction in the content of the unreacted alkylene glycol. In this case, from the viewpoint of increasing the content of the unreacted alkylene glycol, in a case where the amount of the alkylene glycol added is 1.5 parts by mass or less, the heat treatment [1] is preferably performed at a pressure of the vent of 5000 Pa or more and the atmospheric pressure or less, and in a case where the amount of the alkylene glycol added is more than 1.5 parts by mass and 3.0 parts by mass or less, the heat treatment [1] is preferably performed at a pressure of the vent of 100 Pa or more and the atmospheric pressure or less. In a case where the amount of the alkylene glycol added is more than 3.0 parts by mass, the heat treatment [1] is preferably performed at a pressure of the vent set to the atmospheric pressure, from the viewpoint of suppressing vent-up.

In a case where the heat treatment [1] is performed in a polymerization tank with a stirring blade or the like, the heating time for melt of the polyester resin [A] is preferably 5 minutes or more and 90 minutes or less. The heating time of 5 minutes or more is preferable because the polyester resin [A] can be sufficiently melted. If the heating time is 90 minutes or less, more preferably 60 minutes or less, and still more preferably 30 minutes or less, an increase in the acid value due to thermal decomposition of the resulting polyester resin [B] is small, and therefore such a heating time is preferable. Furthermore, the alkylene glycol is preferably added after the polyester resin [A] is melted because the content of the unreacted alkylene glycol contained in the resulting polyester resin [B] is increased.

The resulting polyester resin [B] is preferably granulated in order to perform the subsequent heat treatment [2] appropriately. The polyester resin [B] is preferably extruded into a strand form and then cut, or cut while extruded into water to form a pellet having a length of 1.00 mm or more and 5.00 mm or less and a diameter of 1.00 mm or more and 5.00 mm or less, but the granulation method is not limited thereto. If the length and the diameter of the pellet are 1.00 mm or more, and more preferably 1.50 mm or more, the intrinsic viscosity does not excessively increase in a short time during the heat treatment [2], the heat treatment [2] can be performed for an appropriate time, and thus the effect of reducing the oligomer content is efficiently exhibited, and therefore such a pellet size is preferable. If the length and the diameter of the pellet are 5.00 mm or less, and more preferably 3.70 mm or less, the distance from the center to the surface of the pellet is not too long, and the oligomer amount inside the pellet is efficiently reduced during the heat treatment [2], and therefore such a pellet size is preferable.

[Heat Treatment [2] Step]

The polyester resin obtained in the present invention is obtained by subjecting the polyester resin [B] to the heat treatment [2]. The heat treatment [2] step in the present invention is performed under the condition of a treatment temperature of $T_{mB}$ (°C) or less with respect to the melting point $T_{mB}$ (°C) of the polyester resin [B] in the flow of an inert gas or under high vacuum. If the temperature of the heat treatment [2] is set to $T_{mB}$ (°C) or less, it is possible to suppress an increase in the oligomer content and an increase in the acid value caused by melt of the polyester resin [B]. If the temperature of the heat treatment [2] is set to preferably $(T_{mB} - 60)$ °C or more, and more preferably $(T_{mB} - 40)$ °C, it is possible to obtain an effect of decreasing the acid value and an effect of reducing the oligomer content by the terminal hydroxyl group and the unreacted alkylene glycol in the polyester resin [B]. In a case where the polyester resin [B] is a polyethylene terephthalate resin, the heat treatment [2] is preferably performed under the condition of 190 to 250°C, and more preferably 195 to 240°C. In a case where the polyester resin [B] is a polybutylene terephthalate resin, the heat treatment [2] is preferably performed under the condition of 180 to 210°C, and more preferably 185 to 200°C.

During the heat treatment [2] step in the present invention, solid-phase polymerization of the polyester resin [B] may proceed. The progress of the solid-phase polymerization improves the mechanical properties of the resulting polyester resin, but meanwhile, the flowability deteriorates. Therefore, the heat treatment [2] is preferably performed so that the finally obtained polyester resin (hereinafter, sometimes referred to as a polyester resin [C]) has an intrinsic viscosity within a range of 0.70 dL/g or more and 1.00 dL/g or less. When the heat treatment [2] is performed until the intrinsic viscosity of the polyester resin [C] becomes 0.70 dL/g or more, the content of the unreacted alkylene glycol is decreased to 0.03 mass% or less due to consumption by a reaction with the polyester component or volatilization. The intrinsic viscosity of the polyester resin is a value determined by measuring an o-chlorophenol solution of the polyester resin at 25°C.

The execution time of the heat treatment [2] is preferably 5 hours or more and 20 hours or less. If the execution time is 5 hours or more, and more preferably 10 hours or more, the intrinsic viscosity of the polyester resin [C] is not too low, the strength of a molded article can be improved, generation of a burr of a molded article is suppressed, and the oligomer content can be efficiently reduced. If the execution time is 20 hours or less, the intrinsic viscosity of the polyester resin [C] is not too high, and the flowability is excellent.

[Polyester Resin [C]]

As the polyester resin [C] obtained by the present invention, any one of the polyester resins disclosed in [Polyester Resin [A]] is selected, and polybutylene terephthalate is preferable from the viewpoint of excellent balance between mechanical properties and molding processability.

The polyester resin [C] obtained by the present invention preferably has an acid value of 50 eq/t or less, more preferably 30 eq/t or less, still more preferably 20 eq/t or less, still more preferably 15 eq/t or less, and still more preferably 10 eq/t or less from the viewpoint of suppressing deterioration of mechanical properties and moldability. The lower limit of the acid value is 0 eq/t. Here, the acid value is a value obtained by measurement in which the obtained polyester resin is dissolved in an o-cresol/chloroform solvent and then the resulting solution is titrated with ethanolic potassium hydroxide.

The polyester resin [C] obtained by the present invention preferably has an oligomer content of less than 0.30 mass%. If the oligomer content is less than 0.30 mass%, more preferably less than 0.25 mass%, still more preferably less than 0.20 mass%, and still more preferably less than 0.15 mass%, mold fouling during molding is greatly suppressed, and the frequency of mold cleaning is reduced in continuous molding during production. The lower limit of the oligomer content is 0.00 mass%. Here, the oligomer content is a value determined by dissolving the polyester resin [C] in a hexafluoroisopropanol/chloroform solvent (1/1: volume ratio), then precipitating a high-molecular-weight component with an acetonitrile solvent, filtering the precipitate with a polytetrafluoroethylene disk filter (0.45 $\mu$m) to obtain a filtrate, and quantifying a cyclic trimer using a high performance liquid chromatograph.

The polyester resin [C] of the present invention has an intrinsic viscosity of 0.70 dL/g or more and 1.00 dL/g or less that is obtained by measuring the o-chlorophenol solution at 25°C. If the intrinsic viscosity is 0.70 dL/g or more, and more preferably 0.80 dL/g or more, the strength of a molded article can be improved, and generation of a burr of a molded article can be suppressed. If the intrinsic viscosity is 1.00 dL/g or less, and more preferably 0.90 dL/g or less, the flowability at the time of extrusion and molding is good, and deterioration of mechanical properties of a molded article due to decomposition of the resin, molding defects, and the like are suppressed.

The polyester resin [C] of the present invention preferably has a weight-average molecular weight of 13000 or more and 18000 or less. If the weight-average molecular weight is 13000 or more, and more preferably 15000 or more, the strength of a molded article can be improved, and generation of a burr of a molded article can be suppressed, and therefore such a weight-average molecular weight is preferable. If the weight-average molecular weight is 18000 or less, and more preferably 16000 or less, the flowability at the time of extrusion and molding is good, and deterioration of mechanical properties of a molded article due to decomposition of the resin, molding defects, and the like are suppressed, and therefore such a weight-average molecular weight is preferable. Here, the weight-average molecular weight is a value calculated by gel permeation chromatography (solvent: hexafluoroisopropanol, standard sample: polymethyl methacrylate).

The polyester resin of the present invention and, as necessary, another component are melt-kneaded and thus can be formed into a polyester resin composition.

Examples of the method of melt kneading include a method in which a polyester resin, various additives, and the like are preliminarily mixed and supplied to an extruder or the like and thus melt kneading is performed, and a method in which predetermined amounts of components are supplied to an extruder or the like using a fixed quantity feeder such as a gravimetric feeder and thus melt kneading is performed.

Examples of the preliminary mixing include a method of dry blending and a method of mixing in which a mechanical mixer is used such as a tumbler, a ribbon mixer, or a Henschel mixer. Furthermore, a fibrous reinforcing material may be added with a side feeder installed between the breech-loading part and the discharge part of a multi screw extruder such as a twin-screw extruder. In the case of a liquid additive, a method may be used such as a method in which the liquid additive is added with a liquid addition nozzle installed between the breech-loading part and the discharge part of a multi screw extruder such as a twin-screw extruder using a plunger pump, or a method in which the liquid additive is supplied from the breech-loading part or the like using a metering pump.

The composition is preferably granulated and then molded. A granulation method is preferable in which the polyester resin, another additive, and the like are extruded into a strand form using, for example, a single-screw extruder, a twin-screw extruder, a triaxial extruder, or a conical extruder equipped with a "unimelt" or "dulmadge" screw, a kneader-type kneading machine, or the like and then cut, or cut while extruded into water to form a pellet having a length of 1.5 to 5.0 mm and a diameter of about 1.5 to 5.0 mm, but the granulation method is not limited thereto.

The polyester resin composition including the polyester resin according to the present invention is melt-molded, and thus a molded article in the form of a film, a fiber, or another shape can be obtained. Examples of the melt-molding method include injection molding, extrusion molding, and blow molding, and injection molding is particularly preferably used.

In addition to a normal injection molding method, other injection molding methods are known such as gas assisted molding, two-color molding, sandwich molding, in-mold molding, insert molding, and injection press molding, and any of the molding methods can also be applied.

The molded article including the polyester resin according to the present invention can be used for various applications such as mechanical machine components, electric components, electronic components, and automobile components utilizing the characteristics of excellent mechanical properties and excellent hydrolysis resistance. Specific examples of the mechanical machine components, the electric components, the electronic components, and the automobile components include breakers, electromagnetic switches, focus cases, flyback transformers, molded articles for fusers of copying machines and printers, general household electrical appliances, housings of OA equipment and the like, components of variable capacitor cases, various terminal boards, transformers, printed wiring boards, housings, terminal blocks, coil bobbins, connectors, relays, disk drive chassis, transformers, switch components, wall outlet components, motor components, sockets, plugs, capacitors, various casings, resistors, electric and electronic components into which metal terminals and conducting wires are incorporated, computer-related components, audio components such as acoustic components, components of lighting equipment, telegraphic communication equipment-related components, telephone equipment-related components, components of air conditioners, components of consumer electronics such as VTRs and TVs, copying machine components, facsimile machine components, components of optical devices, components of automotive ignition devices, connectors for automobiles, and various automotive electrical components.

[Examples]

Next, the method for producing a polyester resin and the polyester resin of the present invention will be specifically described with reference to Examples.

[Method of Measuring Properties]

In Examples and Comparative Examples, properties were evaluated with the measurement methods described below.

1. Melting point of polyester resin

About 10 mg of a polyester resin was collected and subjected to measurement using a differential scanning calorimeter (DSC7 manufactured by PerkinElmer, Inc.) under a nitrogen atmosphere. The polyester resin was heated to 280°C at a temperature rise rate of 20 °C/min to be brought into a molten state, then cooled to 30°C at a temperature decrease rate of 20 °C/min, and then heated at a temperature rise rate of 20 °C/min, and the temperature at the top of the endothermic peak observed at this time was regarded as the melting point.

2. Acid value of polyester resin

About 2 g of the polyester resin was dissolved in 50 mL of a chloroform/o-cresol (1/2: volume ratio) preparation solution. To this solution, an appropriate amount of bromothymol blue/ethanol solution was added, the resulting solution was then titrated with an ethanol solution of 0.02 N potassium hydroxide, and the acid value was calculated with the following formula (unit: eq/t).

$$AV = ((V - V_0) \times C)/(W \times 10^{-3})$$

AV: acid value [eq/t], V: amount of polyester resin solution subjected to titration [mL], $V_0$: amount of chloroform/o-cresol (1/2: volume ratio) preparation solution subjected to titration [mL], C: sodium hydroxide/ethanol solution concentration [mol/L], W: mass of polyester resin [g].

3. Intrinsic viscosity of polyester resin

The polyester resin was dissolved in o-chlorophenol so that the concentration in the resulting solution was 0.5 mass%, the outflow time of the solution and the outflow time of the solvent were then measured at a temperature of 25°C using a Ubbelohde viscometer, and the intrinsic viscosity was calculated with the following formula.

$$[\eta] = 0.25 \times (t/t_0 - 1 + 3 \times \ln (t/t_0))/c$$

$[\eta]$: Intrinsic viscosity [dL/g],
t: Outflow time of polyester resin solution [s],
$t_0$: Outflow time of o-chlorophenol [s],
c: Concentration in solution [g/cm$^3$].

4. Oligomer content of polyester resin

The polyester resin was dissolved in a hexafluoroisopropanol/chloroform solvent (1/1: volume ratio), a high-molecular-weight component was then precipitated with an acetonitrile solvent, the precipitate was filtered with a polytetrafluoroethylene disk filter (0.45 μm) to obtain a filtrate, and the filtrate was analyzed using a high performance liquid chromatograph (LC-10A manufactured by SHIMADZU CORPORATION, column: Inertsil OSD-3V, column temperature: 45°C, mobile phase: water/acetonitrile (1/4: volume ratio), flow rate: 1.5 mL/min, detection wavelength: UV 242 mm). Acetonitrile solutions of a cyclic trimer were prepared at various concentrations, a calibration curve was created by the chromatograph, and thus the cyclic trimer contained in the polyester resin was quantified and the oligomer content was obtained (unit: mass%).

5. Content of unreacted alkylene glycol in polyester resin

The polyester resin was dissolved in a hexafluoroisopropanol/chloroform solvent (1/1: volume ratio), a high-molecular-weight component was then precipitated with an acetonitrile solvent, the precipitate was filtered with a polytetrafluoroethylene disk filter (0.45 μm) to obtain a filtrate, and the filtrate was analyzed using a gas chromatograph (GC-2010 manufactured by SHIMADZU CORPORATION, column: DB-5, column temperature: 80-300°C, temperature rise rate: 6 °C/min, vaporizing chamber temperature: 300°C, mobile phase: helium, detector: FID). Acetonitrile solutions of an alkylene glycol were prepared at various concentrations, a calibration curve was created by the chromatograph, and thus the alkylene glycol was quantified and the alkylene glycol content was obtained (unit: mass%).

6. Presence or absence of mold fouling

A square plate having a width of 80 mm × a length of 80 mm × a thickness of 2 mm of the polyester resin [C] was molded using an injection molding machine (NEX1000 manufactured by NISSEI PLASTIC INDUSTRIAL CO., LTD.) under the conditions, in a case where the polyester resin [C] was polybutylene terephthalate, of a molding temperature of 280°C, a mold temperature of 80°C, and a cooling time of 10 seconds, under the conditions, in a case where the polyester resin [C] was polyethylene terephthalate, of a molding temperature of 280°C, a mold temperature of 120°C, and a cooling time of 10 seconds, and under the conditions, in a case where the polyester resin [C] was a polyester elastomer, of a molding temperature of 280°C, a mold temperature of 60°C, and a cooling time of 10 seconds. The mold after continuously molding 10000 square plates was visually observed, and the polyester resin was evaluated as A when mold fouling due to precipitation of the oligomer was not observed at all, as B when mold fouling was thinly adhered to a part of the mold, as C when mold fouling was thinly adhered to the entire mold, and as D when the entire mold was clouded and a white foreign object was clearly observed in a part of the mold, and thus determined to be excellent in suppressing mold fouling when evaluated as A or B.

7. Flowability of polyester resin

The flowability was determined using a mold for a strip-shaped molded article having a thickness of 1 mm and a width of 10 mm on the basis of the flow length during injection molding. The injection molding conditions in a case where the polyester resin [C] was polybutylene terephthalate were a cylinder temperature of 250°C, a mold temperature of 80°C, an injection pressure of 30 MPa, and an injection speed of 100 mm/s. In a case where the polyester resin [C] was polyethylene terephthalate, the cylinder temperature was 280°C, the mold temperature was 40°C, the injection pressure was 30 MPa, and the injection speed was 100 mm/s. In a case where the polyester resin [C] was a polyester elastomer, the cylinder temperature was 250°C, the mold temperature was 60°C, the injection pressure was 30 MPa, and the injection speed was 100 mm/s. A resin having a flow length of 100 mm or more was determined to be excellent in flowability. One having a flow length of 110 mm or more is more excellent, one having a flow length of 120 mm or more is still more excellent, and one having a flow length of 140 mm or more is particularly excellent.

8. Mechanical properties of polyester resin

An ISO-1A dumbbell test piece for evaluation of tensile properties having a thickness of 4 mm was obtained using an injection molding machine (NEX1000 manufactured by NISSEI PLASTIC INDUSTRIAL CO., LTD.). In a case where the polyester resin [C] was polybutylene terephthalate, the test piece was molded under the molding cycle conditions of a cylinder temperature of 250°C, a mold temperature of 80°C, an injection speed of 50 mm/s, an injection time and a pressure dwell time of 10 seconds in total, and a cooling time of 10 seconds. In a case where the polyester resin [C] was polyethylene terephthalate, the test piece was molded under the molding cycle conditions of a cylinder temperature of 280°C, a mold temperature of 80°C, an injection speed of 50 mm/s, an injection time and a pressure dwell time of 10 seconds in total, and a cooling time of 10 seconds. In a case where the polyester resin [C] was a polyester elastomer, the test piece was molded under the molding cycle conditions of a cylinder temperature of 250°C, a mold temperature of 60°C, an injection speed of 50 mm/s, an injection time and a pressure dwell time of 10 seconds in total, and a cooling time of 10 seconds. For the obtained test piece for evaluation of tensile properties, the maximum tensile strength point (tensile strength) was measured in accordance with ISO 527-1, 2 (2012) using a tensile tester (Autograph AG-50kNX Plus manufactured by SHIMADZU CORPORATION). The average of the measured values for three test pieces was taken as the tensile strength value.

9. Hydrolysis resistance of polyester resin

An ISO-1A dumbbell test piece for evaluation of tensile properties having a thickness of 4 mm was obtained using an injection molding machine (NEX1000 manufactured by NISSEI PLASTIC INDUSTRIAL CO., LTD.) under the same injection molding conditions as in the section 8. The obtained ISO-1A dumbbell was put into a highly accelerated stress test chamber (EHS-411 manufactured by ESPEC CORP.) set at a temperature of 121°C and a humidity of 100% RH for 50 hours to perform a heat-moisture treatment. The tensile strength of the molded article after the heat-moisture treatment was measured under the same conditions as in the tensile test in the section 8, and the measured values of three test pieces were averaged. The percentage, obtained by the following formula, of the value of the tensile strength after the heat-moisture treatment with respect to the tensile strength without a heat-moisture treatment was regarded as the tensile strength retention rate.

(Tensile strength after heat-moisture treatment/tensile strength without heat-moisture treatment) $\times$ 100 = tensile strength retention rate (%)

A resin having a tensile strength retention rate of less than 70% was determined to be poor in hydrolysis resistance, and a material having a large tensile strength retention rate was determined to be excellent. A resin having a tensile strength retention rate of 80% or more was determined to be more excellent, one having a tensile strength retention rate of 90% or more was determined to be still more excellent, and one having a tensile strength retention rate of 99% or more was determined to be particularly excellent.

<Materials used in Examples and Comparative Examples>

(1) Polyester resin [A]

Virgin polyester resin [A-1]

· PBT1
Polybutylene terephthalate, melting point: 225°C, manufactured by Toray Industries, Inc., acid value: 20 eq/t, intrinsic viscosity: 0.88 dL/g, weight-average molecular weight: 16100
· PBT2
Polybutylene terephthalate, melting point: 222°C, manufactured by Toray Industries, Inc., acid value: 30 eq/t, intrinsic viscosity: 1.30 dL/g, weight-average molecular weight: 23000
· PET1
Polyethylene terephthalate, melting point: 260°C, manufactured by Toray Industries, Inc., acid value: 20 eq/t, intrinsic viscosity: 0.80 dL/g, weight-average molecular weight: 15000
· TPEE
Polyester elastomer, melting point: 201°C, "HYTREL" (registered trademark) 5556 manufactured by Celanese Corp., intrinsic viscosity: 1.46 dL/g.

Collected polyester resin [A-2]

· PBT3
Collected non-conforming pellet at the time of production of polybutylene terephthalate resin, melting point: 223°C, acid value: 20 eq/t, intrinsic viscosity: 1.08 dL/g, weight-average molecular weight: 19100
· PBT4
Collected waste in molding at the time of injection molding of resin composition including polybutylene terephthalate resin, melting point: 220°C, acid value: 70 eq/t, intrinsic viscosity: 0.53 dL/g, weight-average molecular weight: 11900.
· PBT6
Collected waste in molding at the time of injection molding of resin composition including polybutylene terephthalate resin, melting point: 223°C, acid value: 56 eq/t, intrinsic viscosity: 0.61 dL/g, weight-average molecular weight: 12800.

(2) Alkylene glycol

· 1,4-Butanediol (BDO, boiling point: 228°C, manufactured by Mitsubishi Chemical Corporation)
· Ethylene glycol (EG, boiling point: 198°C, manufactured by Mitsubishi Chemical Corporation).

(3) Dicarboxylic acid

· Terephthalic acid (manufactured by Mitsui Chemicals, Inc.)

(4) Transesterification catalyst

· Tetra-n-butyl orthotitanate (manufactured by Tokyo Chemical Industry Co., Ltd. (TCI)).

(5) Masterbatch for black coloring

· MB-9811 BLACK (polybutylene terephthalate, pigment concentration: 20%, manufactured by ECCA CO., LTD.).

<Preparation of polyester resin [A] having low viscosity (PBT5, PET2)>

· PBT5 (Comparative Examples 3 and 4)

Tetra-n-butyl titanate (mass ratio of terephthalic acid/tetra-n-butyl titanate = 1/0.0005) was added to a slurry of 2000 g of terephthalic acid and 1627 g of 1,4-butanediol (molar ratio of terephthalic acid/1,4-butanediol = 1/1.5), and a transesterification reaction was started at a temperature of 190°C under a nitrogen stream. Then, the temperature was gradually raised, and finally, a transesterification reaction was performed for 3 hours under the condition of a temperature of 240°C. Antimony trioxide ($1.0 \times 10^{-4}$ mol with respect to 100 g of the polyester resin to be produced) as a polycondensation reaction catalyst was added to the obtained reaction product, and the resulting mixture was subjected to a polymerization reaction for 2 hours under the conditions of a temperature of 250°C and a pressure of 100 Pa, then discharged into a strand form, passed through a cooling bath, and granulated so as to have a pellet size described in Table 3 by adjusting the take-up speed with a strand cutter to obtain a pellet of a polybutylene terephthalate prepolymer (PBT5, acid value: 26 eq/t, intrinsic viscosity: 0.58 dL/g). The obtained pellet was dried in a hot air oven at a temperature of 110°C for 6 hours.

· PET2 (Comparative Examples 6 and 7)

A pellet of a prepolymer of polyethylene terephthalate (PET2, acid value: 20 eq/t, intrinsic viscosity: 0.50 dL/g) was obtained in the same manner as in the preparation of PBT5 except that 1,4-butanediol was changed to ethylene glycol and the temperature of the polymerization reaction was changed to 280°C. The obtained pellet was dried in a hot air oven at a temperature of 110°C for 6 hours.

[Examples 1 to 20, Comparative Examples 1 to 14]

Each polyester resin [A] corresponding to an example shown in Tables 1 to 3 was subjected to the heat treatment [1] and the heat treatment [2]. For Comparative Examples 3, 4, 6, and 7, the heat treatment [1] was not performed, and the polyester resin [A] was directly subjected to the heat treatment [2]. For Comparative Example 8, the heat treatment [2] was not performed, and each property was evaluated assuming that the polyester resin [B] was the polyester resin [C]. For Comparative Examples 9 and 11, the heat treatments [1] and [2] were not performed, and each property was evaluated assuming that the polyester resin [A] was the polyester resin [C].

<Heat Treatment [1] in Examples 1 to 6 and 9 to 20 and Comparative Examples 5, 8, 13, and 14>

In Examples 1 to 6 and 9 to 20 and Comparative Examples 5, 8, 13, and 14, the heat treatment [1] was performed with an extruder. Using a co-rotation twin-screw extruder with a rotary vent (TEX-30α manufactured by The Japan Steel Works, Ltd.) having a screw diameter of 30 mm and a L/D of 35, the polyester resin [A] and an alkylene glycol in a composition shown in Table 1 were added from the breech-loading part of the twin-screw extruder. In Examples 1 to 6 and 9 to 18 and Comparative Examples 5, 8, and 13, the vent was set to the atmospheric pressure, and in Examples 19 and 20 and Comparative Example 14, the vent was set to a depressurized state, and thus the heat treatment [1] was performed. The alkylene glycol was supplied with a metering pump. In a case where the polyester resin [A] was polybutylene terephthalate, melt kneading was performed under the extrusion conditions of a kneading temperature of 250°C and a screw rotation of 200 rpm, in a case where the polyester resin [A] was polyethylene terephthalate, melt kneading was performed under the extrusion conditions of a kneading temperature of 280°C and a screw rotation of 200 rpm, and in a case where the polyester resin [A] was a polyester elastomer, melt kneading was performed under the extrusion conditions of a kneading temperature of 250°C and a screw rotation of 200 rpm, and the melt-kneaded product was discharged into a strand form, passed through a cooling bath, and granulated so as to have a pellet size described in Table 1 by adjusting the take-up speed with a strand cutter to obtain a pellet of the polyester resin [B] (Table 1). The obtained pellet was dried in a hot air oven at a temperature of 110°C for 6 hours.

At the time of preparation of the polyester resin [B], 3 parts by mass of the masterbatch for black coloring MB-9811 BLACK was added to 100 parts by mass of the polyester resin [A] from the breech-loading part of the extruder, measurement of time was started from the time point of the addition, the measurement of time was ended at the time point when black derived from the masterbatch for black coloring was not confirmed in the resin discharged from the discharge port after confirmation of the black, and the time taken from the start to the end of the measurement was regarded as the heat treatment time in this example (Table 1). This operation was performed after obtaining the polyester resin [B] in an amount necessary for the subsequent heat treatment [2] step, and the polyester resin obtained by adding the masterbatch for black coloring was not used in the subsequent step.

In Comparative Example 5, the melt viscosity of the polyester resin [B] after the heat treatment [1] was so low that the polyester resin [B] was difficult to discharge into a strand form, and thus performance of the subsequent operation was impossible.

<Heat Treatment [1] in Comparative Examples 1, 2, 10 and 12>

In Comparative Examples 1, 2, 10 and 12, an alkylene glycol was not added, and only the polyester resin [A] was fed into the extruder. The heat treatment [1] was performed in the same manner as in Examples 1 to 6 and Comparative Example 5 except for the above-described difference.

<Heat Treatment [1] in Example 7>

In Example 7, the heat treatment [1] was performed using a polymerization tank. Into a 5 L polymerization tank equipped with a stirring blade, 1000 g of PBT1 was dropped, heated to 250°C under a nitrogen stream, and stirred for 30 minutes. After confirming that PBT1 was melted, 10 g of 1,4-butanediol was added, and the mixture was stirred for 1 minute. The melt was confirmed to have a stable viscosity, discharged into a strand form from the discharge port, passed through a cooling bath, and granulated so as to have a pellet size described in Table 1 by adjusting the take-up speed with a strand cutter to obtain a pellet of the polyester resin [B] (Table 1). The obtained pellet was dried in a hot air oven at a temperature of 110°C for 6 hours.

The heat treatment time t was calculated with the following formula in which $t_1$ represents the time from the addition of the alkylene glycol to the polyester resin [A] to the start of the discharge and $t_2$ represents the time from the addition of the alkylene glycol to the end of the discharge.

$$t = (t_1 + t_2)/2 \ldots \text{(Formula)}.$$

<Heat Treatment [1] in Example 8>

In Example 8, the heat treatment [1] was performed using a polymerization tank. Into a 5 L polymerization tank equipped with a stirring blade, 1000 g of PBT1 was dropped, heated to 250°C under a nitrogen stream, and stirred for 30 minutes. After confirming that PBT1 was melted, 10 g of 1,4-butanediol was added, and the mixture was stirred for 5 minutes. The melt was confirmed to have a stable viscosity, discharged into a strand form from the discharge port, passed through a cooling bath, and granulated so as to have a pellet size described in Table 1 by adjusting the take-up speed with a strand cutter to obtain a pellet of the polyester resin [B] (Table 1). The obtained pellet was dried in a hot air oven at a temperature of 110°C for 6 hours.

The heat treatment time was calculated in the same manner as in the heat treatment [1] of Example 7.

<Heat Treatment [2]>

The pellet of the polyester resin obtained in the previous step was subjected to the heat treatment [2], in a case where the used polyester resin [A] was polyethylene terephthalate, under the conditions of a temperature of 230°C and a pressure of 100 Pa, and in a case where the used polyester resin [A] was polybutylene terephthalate, under the conditions of a temperature of 170 to 210°C and a pressure of 100 Pa, and in a case where the used polyester resin [A] was a polyester elastomer, under the conditions of a temperature of 180°C and a pressure of 100 Pa to obtain a polyester resin [C] (Table 1). In Comparative Example 13, the heat treatment [2] was performed at 240°C, which is a temperature higher than the melting point of the polyester resin [B].

In Examples 1 to 20 in which the content of the unreacted alkylene glycol in the polyester resin [B] was 0.05 mass% or more, the oligomer content in the polyester resin [C] was low, and the suppression of mold fouling was excellent. Meanwhile, in Comparative Examples 1, 2, 10, 12, and 14 in which the content of the unreacted alkylene glycol in the polyester resin [B] was less than 0.05 mass%, the oligomer content in the polyester resin [C] was high, and the suppression of mold fouling was poor.

In Comparative Examples 1, 2, 10, and 12 in which the heat treatment [1] was performed without adding an alkylene glycol and then the heat treatment [2] was performed, an effect of reducing the oligomer content by the unreacted alkylene glycol was not obtained, and thus it was impossible to achieve both the reduction in the oligomer content and the flowability.

In Comparative Example 5 in which 6 parts by mass of the alkylene glycol was added, the melt viscosity of the polyester resin [B] after the heat treatment [1] was too low to discharge the polyester resin [B] in a strand form, and the polyester resin [B] was difficult to collect in a uniform shape and had a remarkably poor granulation property.

In Comparative Examples 3, 4, 6, and 7 in which the polyester resin [A] having a low intrinsic viscosity was not subjected to the heat treatment [1] and directly subjected to the heat treatment [2], the suppression of mold fouling was poor in a case where the execution time of the heat treatment [2] was short, and the flowability was poor in a case where the execution time of the heat treatment [2] was long.

In Comparative Example 8 in which the properties were evaluated without performing the heat treatment [2], more mold fouling was observed and the hydrolysis resistance was poorer than in Example 3 in which the heat treatment [2] was performed.

In Comparative Example 13 in which the heat treatment [2] was performed at a temperature higher than the melting point of the polyester resin [B], the oligomer content was not reduced by the heat treatment [2], and the suppression of mold fouling was poor.

In Examples 5, 6, and 17 in which the collected polyester resin was used, the oligomer content was low, the flowability was excellent, and the acid value was significantly reduced compared with that at the time of collecting, and these levels were comparable to those in Examples 1 to 4, 7 to 16, and 18 to 20 in which the virgin polyester resin was used. It has been found that if the present invention is applied to a collected polyester resin, the amount of waste can be reduced, and the carbon dioxide emission can be reduced with small amounts of an alkylene glycol and heat energy required for regeneration.

Meanwhile, the suppression of mold fouling was poor in Comparative Examples 10 and 12 in which the collected polyester resin was subjected to the heat treatment [1] without addition of an alkylene glycol and Comparative Examples 9 and 11 in which the collected polyester resin was not subjected to the heat treatments [1] and [2] and the properties were directly evaluated.

In Examples 1 to 3, 5, and 6 in which the heat treatment [1] was performed with an extruder, the heat treatment was possible in a shorter time than in Examples 7 and 8 in which a polymerization tank was used for the heat treatment [1], and therefore a smaller amount of the alkylene glycol was consumed in the volatilization and the transesterification reaction, showing a higher value of the content of the unreacted alkylene glycol in the polyester resin [B]. Therefore, in Examples 1 to 3, 5, and 6, the effect of reducing the oligomer content was larger, and the suppression of mold fouling was more excellent.

As a result of comparing Example 7 and Example 8 in which the heat treatment [1] was performed in the polymerization tank, in Example 7 in which the heat treatment time after the addition of the alkylene glycol was shorter, the volatilization of the alkylene glycol and the transesterification reaction with the polyester were smaller, the alkylene glycol content in the polyester resin [B] was higher, and the value of the oligomer content in the polyester resin [C] was lower.

In Examples 1 to 3, 5, and 6 in which the polyester resin [A] was polybutylene terephthalate and fed into the extruder using 1,4-butanediol as the alkylene glycol, the melting point of the polyester resin was lower and the boiling point of the alkylene glycol was higher than in Example 4 in which the polyester resin [A] was polyethylene terephthalate and ethylene glycol was used as the alkylene glycol, and therefore a smaller amount of the alkylene glycol was consumed in the volatilization and the transesterification reaction in the heat treatment [1] performed with the extruder, showing a higher value of the content of the unreacted alkylene glycol in the polyester resin [B]. Therefore, in Examples 1 to 3, 5, and 6, the effect of reducing the oligomer content was larger, and the suppression of mold fouling was more excellent.

In Examples 9 and 10 in which the pellet size (diameter) was smaller than in Example 1, the increase in the intrinsic viscosity due to the heat treatment [2] was larger, and in particular in Example 10 in which the pellet diameter was less than 1.00 mm, the increase was remarkable, and the treatment was completed in a short time. Therefore, in Example 1, the effect of reducing the oligomer content was larger and the suppression of mold fouling was more excellent than in Example 10 in which the treatment was completed in a short time.

In Example 1, the distance from the center to the surface of the pellet was shorter than in Examples 11 and 12 in which the pellet size (diameter) was large, and reduction in the oligomer amount inside the pellet was more efficiently achieved during the heat treatment [2]. This tendency was particularly remarkable in comparison with Example 12 in which the pellet diameter was more than 5.00 mm. Therefore, in Example 1, the suppression of mold fouling was more excellent than in Example 12.

In Example 13 in which the heat treatment [2] was performed at a lower temperature than in Example 1, the increase in the intrinsic viscosity tended to be small in the heat treatment [2].

In Example 14 in which the heat treatment [2] was performed at a higher temperature than in Example 1, the increase in the intrinsic viscosity tended to be large in the heat treatment [2], and the treatment was completed in a short time. Therefore, in Examples 1, the effect of reducing the oligomer content was larger and the suppression of mold fouling was more excellent than in Example 14 in which the treatment was completed in a short time.

In Example 15 in which the heat treatment [2] was completed in a shorter time than in Example 1, the intrinsic viscosity tended to be low, and the oligomer content tended to be high.

In Example 16 in which the heat treatment [2] was performed for a longer time than in Example 1, the intrinsic viscosity tended to be high, and the oligomer content tended to be low.

In Examples 1 to 3, 5, and 6 in which the polyester resin [A] was polybutylene terephthalate, the cyclic oligomer amount was more efficiently reduced and therefore the suppression of mold fouling was more excellent than in Example 18 in which the polyester resin [A] was a polyester elastomer.

[Table 1-1]

| | | Unit | Example | | | | |
|---|---|---|---|---|---|---|---|
| | | | 1 | 2 | 3 | 4 | 5 |
| Polyester resin [A] | Kind of polyester resin | - | A-1 | A-1 | A-1 | A-1 | A-2 |
| | | - | PBT1 | PBT1 | PBT2 | PET1 | FBT3 |
| | Amount of polyester resin | Parts by mass | 100 | 100 | 100 | 100 | 100 |
| | Oligomer content | wt% | 0.42 | 0.42 | 0.32 | 0.43 | 0.43 |
| | Intrinsic viscosity | dL/g | 0.88 | 0.88 | 1.30 | 0.80 | 1.08 |
| | Acid value | eq/t | 20 | 20 | 30 | 20 | 20 |
| | Melting point | °C | 225 | 225 | 222 | 260 | 223 |
| Heat treatment [1] | Heating temperature | °C | 250 | 250 | 250 | 280 | 250 |
| | Instrument | - | Extruder | Extruder | Extruder | Extruder | Extruder |
| | Heat treatment time | s | 45 | 44 | 46 | 44 | 44 |
| | Kind of alkylene glycol | - | BDO | BDO | BDO | EG | BDO |
| | Amount of added alkylene glycol | Parts by mass | 1.0 | 3.0 | 1.0 | 1.0 | 1.0 |
| | Vent pressure | Pa | Atmospheric pressure | Atmospheric pressure | Atmospheric pressure | Atmospheric pressure | Atmospheric pressure |
| Polyester resin [B] | Oligomer content | wt% | 0.42 | 0.42 | 0.32 | 0.44 | 0.43 |
| | Intrinsic viscosity | dL/g | 0.43 | 0.35 | 0.54 | 0.51 | 0.45 |
| | Weight-average molecular weight | - | 10800 | 10300 | 12000 | 11700 | 10900 |
| | Acid value | eq/t | 23 | 22 | 33 | 22 | 24 |
| | Content of alkylene glycol | wt% | 0.43 | 1.25 | 0.36 | 0.09 | 0.52 |
| | Pellet size — Pellet diameter | mm | 1.97 | 1.96 | 2.14 | 2.08 | 2.01 |
| | Pellet size — Pellet length | mm | 3.42 | 3.56 | 3.45 | 3.62 | 3.51 |
| | Melting point | °C | 223 | 223 | 220 | 258 | 221 |
| Heat treatment [2] | Treatment temperature | °C | 190 | 190 | 190 | 230 | 190 |
| | Treatment time | h | 15 | 15 | 15 | 15 | 15 |

| | | | Unit | Example | | | | |
|---|---|---|---|---|---|---|---|---|
| | | | | 1 | 2 | 3 | 4 | 5 |
| Polyester resin [C] | | Oligomer content | wt% | 0.07 | 0.06 | 0.08 | 0.24 | 0.08 |
| | | Intrinsic viscosity | dL/q | 0.75 | 0.73 | 0.90 | 0.77 | 0.78 |
| | | Acid value | eq/t | 7 | 7 | 15 | 17 | 8 |
| | | Flow length | mm | 140 | 145 | 110 | 138 | 139 |
| | | Presence or absence of mold fouling | - | A | A | A | B | A |
| | Tensile strength | Without treatment | MPa | 61 | 62 | 60 | 70 | 62 |
| | | with heat-moisture treatment for 50 hours | MPa | 61 | 61 | 54 | 59 | 61 |
| | | Tensile strength retention rate | % | 99 | 99 | 90 | 85 | 99 |

[Table 1-2]

| | | Unit | Example | | | | |
|---|---|---|---|---|---|---|---|
| | | | 6 | 7 | 8 | 9 | 10 |
| Polyester resin [A] | Kind of polyester resin | - | A-2 | A-1 | A-1 | A-1 | A-1 |
| | | - | PBT4 | PET1 | FET1 | PBT1 | PBT1 |
| | Amount of polyester resin | Parts by mass | 100 | 100 | 100 | 100 | 100 |
| | Oligomer content | wt% | 0.47 | 0.42 | 0.42 | 0.42 | 0.42 |
| | Intrinsic viscosity | dL/g | 0.53 | 0.88 | 0.88 | 0.88 | 0.88 |
| | Acid value | eq/t | 70 | 20 | 20 | 20 | 20 |
| | Melting point | °C | 220 | 225 | 225 | 225 | 225 |
| Heat treatment [1] | Heating temperature | °C | 250 | 250 | 250 | 250 | 250 |
| | Instrument | - | Extruder | Polymerization tank | Polymerization tank | Extruder | Extruder |
| | Heat treatment time | s | 46 | 286 | 536 | 45 | 45 |
| | Rind of alkylene glycol | - | BDO | BDO | BDO | BDO | BDO |
| | Amount of added alkylene glycol | Parts by mass | 1.0 | 1.0 | 1.0 | 1.0 | 1.0 |
| | Vent pressure | Pa | Atmospheric pressure | Atmospheric pressure | Atmospheric pressure | Atmospheric pressure | Atmospheric pressure |
| Polyester resin [B] | Oligomer content | wt% | 0.47 | 0.45 | 0.45 | 0.42 | 0.42 |
| | Intrinsic viscosity | dL/g | 0.39 | 0.45 | 0.44 | 0.43 | 0.43 |
| | Weight-average molecular weight | | 10500 | 11100 | 11100 | 10800 | 10600 |
| | Acid value | eq/t | 55 | 24 | 25 | 23 | 23 |
| | Content of alkylene glycol | wt% | 0.63 | 0.15 | 0.09 | 0.43 | 0.43 |
| | Pellet size — Pellet diameter | mm | 1.91 | 1.55 | 1.98 | 1.53 | 0.96 |
| | Pellet size — Pellet length | mm | 3.44 | 3.52 | 3.55 | 3.43 | 3.57 |
| | Melting point | °C | 219 | 224 | 225 | 223 | 223 |
| Heat treatment [2] | Treatment temperature | °C | 190 | 190 | 190 | 190 | 190 |
| | Treatment time | h | 15 | 15 | 15 | 15 | 9 |

| | | | Unit | Example | | | | |
|---|---|---|---|---|---|---|---|---|
| | | | | 6 | 7 | 8 | 9 | 10 |
| Polyester resin [C] | | Oligomer content | wt% | 0.10 | 0.18 | 0.23 | 0.10 | 0.21 |
| | | Intrinsic viscosity | dL/g | 0.75 | 0.78 | 0.79 | 0.89 | 0.98 |
| | | Acid value | eq/t | 29 | 17 | 17 | 7 | 7 |
| | | Flow length | mm | 141 | 13B | 137 | 112 | 102 |
| | | Presence or absence of mold fouling | - | A | B | B | A | B |
| | Tensile strength | Without treatment | MPa | 61 | 61 | 61 | 61 | 61 |
| | | With heat-moisture treatment for 50 hours | MPa | 43 | 52 | 52 | 61 | 60 |
| | | Tensile strength retention rate | % | 71 | 85 | 85 | 99 | 99 |

[Table 2-1]

| | | | Unit | Example | | | | |
|---|---|---|---|---|---|---|---|---|
| | | | | 11 | 12 | 13 | 14 | 15 |
| Polyester resin [A] | | Kind of polyester resin | - | A-1 | A-1 | A-1 | A-1 | A-1 |
| | | | - | FBT1 | PBT1 | PBT1 | PBT1 | PBT1 |
| | | Amount of polyester resin | Parts by mass | 100 | 100 | 100 | 100 | 100 |
| | | Oligomer content | wt% | 0.42 | 0.42 | 0.42 | 0.42 | 0.42 |
| | | Intrinsic viscosity | dL/g | 0.88 | 0.88 | 0.88 | 0.88 | 0.88 |
| | | Acid value | eq/t | 20 | 20 | 20 | 20 | 20 |
| | | Melting point | °C | 225 | 225 | 225 | 225 | 225 |
| Heat treatment [1] | | Heating temperature | °C | 250 | 250 | 250 | 250 | 250 |
| | | Instrument | - | Extruder | Extruder | Extruder | Extruder | Extruder |
| | | Heat treatment time | s | 45 | 45 | 45 | 45 | 45 |
| | | Kind of alkylene glycol | - | BDO | BDO | BDO | BDO | BDO |
| | | Amount of added alkylene glycol | Parts by mass | 1.0 | 1.0 | 1.0 | 1.0 | 1.0 |
| | | Vent pressure | Pa | Atmospheric pressure | Atmospheric pressure | Atmospheric pressure | Atmospheric pressure | Atmospheric pressure |
| Polyester resin [B] | | Oligomer content | wt% | 0.42 | 0.42 | 0.42 | 0.42 | 0.42 |
| | | Intrinsic viscosity | dL/g | 0.43 | 0.43 | 0.43 | 0.43 | 0.43 |
| | | Weight-average molecular weight | - | 10800 | 10800 | 10800 | 10800 | 10800 |
| | | Acid value | eq/t | 23 | 23 | 23 | 23 | 23 |
| | | Content of alkylene glycol | wt% | 0.43 | 0.43 | 0.43 | 0.43 | 0.43 |
| | Pellet size | Pellet diameter | mm | 3.22 | 5.09 | 1.97 | 1.97 | 1. 97 |
| | | Pellet length | mm | 3.52 | 3.63 | 3.42 | 3.42 | 3.42 |
| | | Melting point | °C | 223 | 223 | 223 | 223 | 223 |
| Heat treatment [2] | | Treatment temperature | °C | 190 | 190 | 170 | 210 | 190 |
| | | Treatment time | h | 15 | 20 | 20 | 9 | 6 |

| | | | Unit | Example | | | | |
|---|---|---|---|---|---|---|---|---|
| | | | | 11 | 12 | 13 | 14 | 15 |
| Polyester resin [C] | | Oligomer content | wt% | 0.10 | 0.22 | 0.05 | 0.21 | 0.21 |
| | | Intrinsic viscosity | dL/q | 0.72 | 0.74 | 0.72 | 0.99 | 0.71 |
| | | Acid value | eq/t | 8 | 12 | 9 | 15 | 14 |
| | | Flow length | mm | 146 | 140 | 148 | 101 | 150 |
| | | Presence or absence of mold fouling | - | A | B | A | B | B |
| | Tensile strength | Without treatment | MPa | 61 | 60 | 61 | 61 | 61 |
| | | With heat-moisture treatment for 50 hours | MPa | 60 | 55 | 60 | 55 | 55 |
| | | Tensile strength retention rate | % | 99 | 92 | 99 | 90 | 90 |

[Table 2-2]

| | | Unit | Example | | | | |
|---|---|---|---|---|---|---|---|
| | | | 16 | 17 | 18 | 19 | 20 |
| Polyester resin [A] | Kind of polyester resin | - | A-1 | A-2 | A-1 | A-1 | A-1 |
| | | - | FBT1 | PBT6 | TPEE | PBT1 | PHT1 |
| | Amount of polyester resin | Parts by mass | 100 | 100 | 100 | 100 | 100 |
| | Oligomer content | wt% | 0.42 | 0.44 | 0.33 | 0.42 | 0.42 |
| | Intrinsic viscosity | dL/g | 0.88 | 0.61 | 1. 46 | 0. 88 | 0.88 |
| | Acid value | eq/t | 20 | 56 | | 20 | 20 |
| | Melting point | °C | 225 | 223 | 201 | 225 | 225 |
| Heat treatment [1] | Heating temperature | °C | 250 | 250 | 250 | 250 | 250 |
| | Instrument | - | Extruder | Extruder | Extruder | Extruder | Extruder |
| | Heat treatment time | s | 45 | 45 | 45 | 44 | 45 |
| | Kind of alkylene glycol | - | BDO | BDO | BDO | BDO | BDO |
| | Amount of added alkylene glycol | Parts by mass | 1.0 | 1.0 | 2.0 | 3.0 | 1.0 |
| | Vent pressure | Pa | Atmospheric pressure | Atmospheric pressure | Atmospheric pressure | 212 | 6210 |
| Polyester resin [B] | Oligomer content | wt% | 0.12 | 0.44 | 0.33 | 0.42 | 0.42 |
| | Intrinsic viscosity | dL/g | 0.43 | 0.41 10600 | 0.53 | 0.44 | 0.49 |
| | Weight-average molecular weight | - | 10800 | | 11900 | 10900 | 10900 |
| | Acid value | eq/t | 23 | 46 | 38 | 21 | 21 |
| | Content of alkylene glycol | wt% | 0.43 | 0.55 | 0.88 | 0.29 | 0.27 |
| | Pellet size | Pellet diameter | mm | 1.97 | 1.93 | 2.05 | 1.92 | 1.94 |
| | | Pellet length | mm | 3.42 | 3.48 | 3.64 | 3.47 | 3.51 |
| | Melting point | °C | 223 | 221 | 198 | 223 | 223 |
| Heat treatment [2] | Treatment temperature | °C | 190 | 190 | 185 | 190 | 190 |
| | Treatment time | h | 20 | 15 | 15 | 15 | 15 |

(continued)

| | | | Unit | Example | | | | |
|---|---|---|---|---|---|---|---|---|
| | | | | 16 | 17 | 18 | 19 | 20 |
| Polyester resin [C] | Oligomer content | | wt% | 0.05 | 0.05 | 0.23 | 0.13 | 0.14 |
| | Intrinsic viscosity | | dL/g | 0.99 | 0.76 | 0.91 | 0.76 | 0.94 |
| | Acid value | | eq/t | 10 | 23 | 19 | 9 | 9 |
| | Flow length | | mm | 101 | 139 | 109 | 139 | 106 |
| | Presence or absence of mold fouling | | - | A | A | B | A | A |
| | Tensile strength | Without treatment | MPa | 61 | 61 | 16 | 61 | 61 |
| | | With heat-moisture treatment for 50 hours | MPa | 58 | 47 | 13 | 61 | 61 |
| | Tensile strength retention rate | | % | 95 | 77 | 81 | 99 | 99 |

[Table 3-1]

| | | Unit | Comparative Example | | | | | | |
|---|---|---|---|---|---|---|---|---|---|
| | | | 1 | 2 | 3 | 4 | 5 | 6 | 7 |
| Polyester resin [A] | Kind of polyester resin | - | A-1 | A-1 | A-1 | A-1 | A-1 | A-1 | A-1 |
| | | - | PBT1 | FBT1 | FBT5 | PBT5 | FBT1 | PET2 | PET2 |
| | Amount of polyester resin | Parts by mass | 100 | 100 | 100 | 100 | 100 | 100 | 100 |
| | Oligomer content | wt% | 0.42 | 0.42 | 0.45 | 0.45 | 0.42 | 0.45 | 0.45 |
| | Intrinsic viscosity | dL/g | 0.88 | 0.68 | 0.55 | 0.58 | 0.88 | 0.50 | 0.50 |
| | Acid value | eq/t | 20 | 20 | 26 | 26 | 20 | 20 | 20 |
| | Melting point | °C | 225 | 225 | 220 | 220 | 225 | 257 | 257 |
| Heat treatment [1] | Heating temperature | °C | 250 | 250 | - | - | 250 | - | - |
| | Instrument | - | Extruder | Extruder | - | - | Extruder | - | - |
| | Heat treatment time | s | 46 | 46 | - | - | 41 | - | - |
| | Kind of alkylene glycol | - | - | - | - | - | BDO | - | - |
| | Amount of added alkylene glycol | Parts by mass | - | - | - | - | 6.0 | - | - |
| | Vent pressures | Pa | Atmospheric pressure | Atmospheric pressure | - | - | Atmospheric pressure | - | - |
| Polyester resin [B] | Oligomer content | wt% | 0.46 | 0.46 | - | - | 0.39 | - | - |
| | Intrinsic viscosity | dL/g | 0.83 | 0.83 | - | - | 0.25 | - | - |
| | Weight-average molecular weight | - | 15400 | 15400 | - | - | 6800 | - | - |
| | Acid value | eq/t | 30 | 30 | - | - | 21 | - | - |
| | Content of alkylene glycol | wt% | 0.00 | 0.00 | - | - | 3.01 | - | - |
| | Pellet size — Pellet diameter | mm | 2.12 | 2.12 | 2.23 | 2.23 | 1.82 | 2.25 | 2.25 |
| | Pellet size — Pellet length | mm | 3.42 | 3.42 | 3.54 | 3.54 | 3.43 | 3.56 | 3.56 |
| | Melting point | °C | 225 | 225 | 220 | 220 | 214 | 257 | 257 |
| Heat treatment [2] | Treatment temperature | °C | 190 | 190 | 190 | 190 | - | 230 | 230 |
| | Treatment time | h | 21 | 15 | 9 | 15 | - | 15 | 21 |

EP 4 640 738 A1

| | Unit | Comparative Example | | | | | | |
|---|---|---|---|---|---|---|---|---|
| | | 1 | 2 | 3 | 4 | 5 | 6 | 7 |
| Polyester resin [C] — Oligomer content | wt% | 0.31 | 0.34 | 0.32 | 0.18 | - | 0.36 | 0.20 |
| Intrinsic viscosity | dL/g | 1.21 | 0.95 | 0.79 | 1.30 | - | 0.75 | 1.32 |
| Acid value | eq/t | 17 | 23 | 20 | 12 | - | 17 | 11 |
| Flow length | mm | 88 | 103 | 136 | 79 | - | 140 | 75 |
| Presence or absence of mold fouling | - | C | C | C | B | - | D | B |
| Tensile strength — Without treatment | MPa | 58 | 60 | 61 | 57 | - | 71 | 68 |
| Tensile strength — With heat-moisture treatment for 50 hours | MPa | 49 | 45 | 50 | 54 | - | 60 | 66 |
| Tensile strength retention rate | % | 85 | 75 | 81 | 95 | - | 85 | 98 |

[Table 3-2]

| | | Unit | Comparative Example | | | | | | |
|---|---|---|---|---|---|---|---|---|---|
| | | | 8 | 9 | 10 | 11 | 12 | 13 | 14 |
| Polyester resin [A] | Kind of polyester resin | - | A-1 | A-2 | A-2 | A-2 | A-2 | A-1 | A-1 |
| | | - | PBT2 | PBT3 | PBT3 | PBT4 | PBT4 | FBT1 | PBT1 |
| | Amount of polyester resin | Parts by mass | 100 | 100 | 100 | 100 | 100 | 100 | 100 |
| | Oligomer content | wt% | 0.32 | 0.43 | 0.43 | 0.47 | 0.47 | 0.42 | 0.42 |
| | Intrinsic viscosity | dL/g | 1.30 | 1.08 | 1.08 | 0.53 | 0.53 | 0.88 | 0.88 |
| | Acid value | eq/t | 30 | 20 | 20 | 70 | 70 | 20 | 20 |
| | Melting point | °C | 222 | 223 | 223 | 220 | 220 | 225 | 225 |
| Heat treatment [1] | Heating temperature | °C | 250 | - | 250 | - | 250 | 250 | 250 |
| | Instrument | - | Extruder | - | Extruder | - | Extruder | Extruder | Extruder |
| | Heat treatment time | s | 46 | - | 45 | - | 45 | 45 | 45 |
| | Kind of alkylene glycol | - | BDO | - | - | - | - | BDO | BDO |
| | Amount of added alkylene glycol | Parts by mass | 1.0 | - | - | - | - | 1.0 | 1.0 |
| | Vent pressure | Pa | Atmospheric pressure | - | Atmospheric pressure | - | Atmospheric pressure | Atmospheric pressure | 114 |
| Polyester resin [B] | Oligomer content | wt% | 0.32 | - | 0.47 | - | 0.58 | 0.42 | 0.42 |
| | Intrinsic viscosity | dL/g | 0.54 | - | 1.03 | - | 0.50 | 0.43 | 0.54 |
| | Weight-average molecular weight | - | 12000 | - | 18300 | - | 11600 | 10800 | 12000 |
| | Acid value | eq/t | 33 | - | 30 | - | 75 | 23 | 21 |
| | Content of alkylene glycol | wt% | 0.36 | - | 0.00 | - | 0.00 | 0.43 | 0.04 |
| | Pellet size — Pellet diameter | mm | 2.14 | 2.12 | 2.01 | 2.21 | 1.98 | 1.97 | 1.99 |
| | Pellet size — Pellet length | mm | 3.45 | 3.55 | 3.54 | 3.58 | 3.47 | 3.42 | 3.61 |
| | Melting point | °C | 220 | 223 | 223 | 220 | 220 | 223 | 223 |
| Heat treatment [2] | Treatment temperature | °C | - | - | 190 | - | 190 | 240 | 190 |
| | Treatment time | h | - | - | 5 | - | 15 | 3 | 15 |

EP 4 640 738 A1

| | | | Unit | Comparative Example | | | | | | |
|---|---|---|---|---|---|---|---|---|---|---|
| | | | | 8 | 9 | 10 | 11 | 12 | 13 | 14 |
| Polyester resin [C] | | Oligomer content | wt% | 0.32 | 0.43 | 0.38 | 0.47 0.53 | 0.37 | 0.40 | 0.33 |
| | | Intrinsic viscosity | dL/g | 0.54 | 1.08 | 1.22 | | 0.90 | 0.98 | 0.91 |
| | | Acid value | eq/t | 33 | 20 | 28 | 70 | 60 | 32 | 12 |
| | | Flow length | mm | 165 | 95 | 87 | 168 | 110 | 89 | 109 |
| | Presence or absence of mold fouling | | - | C | D | D | D | D | D | C |
| | Tensile strength | Without treatment | MPa | 53 | 61 | 61 | 52 | 59 | 62 | 61 |
| | | With heat-moisture treatment for 50 hours | MPa | 35 | 49 | 50 | 5 | 12 | 41 | 56 |
| | Tensile strength retention rate | | % | 66 | 80 | 83 | 10 | 20 | 66 | 92 |

**Claims**

1.  A method for producing a polyester resin, the method comprising:

    a heat treatment [1] step of adding 0.1 to 5.0 parts by mass of an alkylene glycol to 100 parts by mass of a polyester resin [A] to obtain a mixture and heating the mixture at a temperature more than a melting point $T_{mA}$ (°C) of the polyester resin [A] to obtain a polyester resin [B]; and
    a heat treatment [2] step of heating the polyester resin [B] at a temperature of $T_{mB}$ (°C) or less, $T_{mB}$ (°C) representing a melting point of the polyester resin [B],
    the polyester resin [B] containing 0.05 mass% or more and 4.76 mass% or less of the alkylene glycol in an unreacted state.

2.  The method for producing a polyester resin according to claim 1, wherein the polyester resin [A] is a collected polyester resin.

3.  The method for producing a polyester resin according to claim 1 or 2, wherein the heat treatment [1] step is performed using an extruder.

4.  The method for producing a polyester resin according to claim 1 or 2, wherein the polyester resin [A] contains at least polybutylene terephthalate.

5.  The method for producing a polyester resin according to claim 4, wherein the alkylene glycol is 1,4-butanediol.

6.  A polyester resin having an oligomer content of less than 0.30 mass% and an intrinsic viscosity of 0.70 dL/g or more and 1.00 dL/g or less.

7.  The polyester resin according to claim 6, being polybutylene terephthalate.

## INTERNATIONAL SEARCH REPORT

International application No.

**PCT/JP2023/045232**

| A. | CLASSIFICATION OF SUBJECT MATTER |
|---|---|

*C08G 63/91*(2006.01)i; *C08G 63/183*(2006.01)i; *C08J 11/04*(2006.01)i
FI:  C08G63/91; C08G63/183; C08J11/04

According to International Patent Classification (IPC) or to both national classification and IPC

| B. | FIELDS SEARCHED |
|---|---|

Minimum documentation searched (classification system followed by classification symbols)

C08G63/91; C08G63/183; C08J11/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2002-173528 A (TOYO BOSEKI KABUSHIKI KAISHA) 21 June 2002 (2002-06-21) | 6-7 |
| | claims, paragraph [0031], examples 1-3, comparative examples 2, 3 | |
| A | | 1–5 |
| X | JP 2009-185194 A (TORAY INDUSTRIES, INC.) 20 August 2009 (2009-08-20) | 6 |
| | claims, examples 1-7, 9, 10, 12, 13, 15-17, comparative examples 2, 4 | |
| A | | 1-5, 7 |
| X | JP 8-283545 A (TORAY INDUSTRIES, INC.) 29 October 1996 (1996-10-29) | 6 |
| | claims, example 3, comparative examples 2, 4-6 | |
| A | | 1-5, 7 |
| A | JP 2017-160359 A (MITSUBISHI CHEMICAL CORPORATION) 14 September 2017 (2017-09-14) | 1-7 |
| A | JP 2004-323837 A (MITSUBISHI CHEMICAL CORPORATION) 18 November 2004 (2004-11-18) | 1-7 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 February 2024** | **05 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2023/045232** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2005-170989 A (ASAHI KASEI CHEMICALS CORPORATION) 30 June 2005 (2005-06-30) | 1-7 |

Form PCT/ISA/210 (second sheet) (July 2022)

## INTERNATIONAL SEARCH REPORT
### Information on patent family members

International application No.

**PCT/JP2023/045232**

| Patent document cited in search report | | | Publication date (day/month/year) | Patent family member(s) | Publication date (day/month/year) |
|---|---|---|---|---|---|
| JP | 2002-173528 | A | 21 June 2002 | (Family: none) | |
| JP | 2009-185194 | A | 20 August 2009 | (Family: none) | |
| JP | 8-283545 | A | 29 October 1996 | (Family: none) | |
| JP | 2017-160359 | A | 14 September 2017 | (Family: none) | |
| JP | 2004-323837 | A | 18 November 2004 | (Family: none) | |
| JP | 2005-170989 | A | 30 June 2005 | (Family: none) | |

Form PCT/ISA/210 (patent family annex) (July 2022)

**REFERENCES CITED IN THE DESCRIPTION**

**Patent documents cited in the description**

- JP 2014181245 A
- JP 2002020473 A
- JP 2005097521 A